# EUROPEAN PATENT SPECIFICATION

(11) **EP 0 806 151 B1**
(45) Date of publication and mention of the grant of the patent: **27.11.2002**
(21) Application number: 97107130.3
(22) Date of filing: 30.04.1997
(51) Int. Cl.: A23G 3/00

(54) **A composite confection product**
Zusammengesetztes Konfektprodukt
Article de confiserie composite

(30) Priority: 10.05.1996 CH 119496
(43) Date of publication of application: 12.11.1997
(73) Proprietor: SOREMARTEC S.A., 6700 Arlon-Schoppach (BE); Ferrero S.p.A., 12051 Alba (Cuneo) (IT); FERRERO OFFENE HANDELSGESELLSCHAFT m.b.H., 60599 Frankfurt (DE)
(72) Inventor: Giachino, Giuseppe, 12040 Sommariva Perno (Cuneo) (IT)
(74) Representative: Rambelli, Paolo

(56) References cited:
- EP-A- 0 064 155
- WO-A-96/28035
- DE-A- 3 329 992
- DE-A- 3 635 858
- DE-C- 3 942 856
- FR-A- 583 399
- FR-A- 2 666 966
- GB-A- 2 196 828
- US-A- 4 725 444

## Description

The present invention relates to a food product and has been developed with particular concern for its possible application in the production of confectionery products.

The present invention specifically faces the problem of making a food product which can be produced on an industrial scale but, at the same time, has organoleptic characteristics of palatability and an appearance typical of a hand-made product such as, for example, a confectionery product.

This problem has already been faced in the art, as evidenced, for example, by US-A-4 362 751 which relates to a naturally raised product impregnated with sweetened and/or alcoholic liquor and coated with chocolate, optionally after filling with cream, or US-A-4 209 536 which describes a food product comprising a spherical shell of a dough which is not raised but baked on a plate with recesses and has a filling substantially free from moisture. Yet again, US-A-4 430 351 describes a filled confectionery product in which two wafer shells enclose a filling enclosed in a water-impermeable capsule. This capsule may be a praline. EP-A-0 086 319 on the other hand describes a product which comprises a creamy filling, with a low moisture content, enclosed by two wafer half-shells sealed together by drops of molten chocolate and with a chocolate coating containing nut granules.

EP-A-0 064 155 describes a confectionery product comprising a shell formed by two wafer shell valves jointly enclosing a water-impermeable capsule, such as a praline including a filling.

GB-A-2 196 828 describes a gelatine confectionery product comprising a shaped gelatine body having a reception seat housing a second body of chewing consistency such as a dried fruit or sugary crust.

Products substantially corresponding to some of the patents mentioned above have had considerable success in terms of acceptance by the public.

There is however a need to provide new solutions which allow further improvements to be made in the organoleptic characteristics of the products without losing, or at least opposing, the essential requirements of manufacture on an industrial scale.

The object of the present invention is to provide a new product which is able to satisfy these requirements.

According to the present invention, this object is achieved by virtue of a food product having the characteristics claimed in the annexed claims.

In summary, the product of the invention combines, in itself, organoleptic characteristics typical of filled baked products (comprising layers of sponge-cake, possibly moisted with syrup or liqueur and including a filling) with the characteristics of pralines, particularly pralines of chocolate (or like material). This is true particularly with regard to the possibility, offered by pralines, of enclosing a liquid or substantially liquid filling intended to wet the filled product only at the moment of consumption.

The invention will now be described, purely by way of non-limitative example, with reference to the appended drawings in which:
Figure 1 is a general perspective view of an embodiment of a product according to the invention,
Figure 2 is a section taken on the line II-II of Figure 1, and
Figure 3 is a further section taken on the line III-III of the same Figure 1.

In the drawings, the product of the invention is generally indicated 1.

Usually, but not necessarily, it is in the form of a confectionery product having the dimensions of a "pastry" and hence of average-large bite-size.

Essentially, the product 1 may be seen as constituted by two elements, that is to say:
- a body 2 having a generally layered structure typical of filled food products, and
- a so-called praline 3.

In the embodiment illustrated, the praline 3 comprises a casing (shell) 4 of a material which offers a certain resistance to biting (typically chocolate or like material) as well as a liquid or creamy filling 5 such as, for example, a sweet syrup and/or liqueur (alcoholic or non-alcoholic).

To advantage, the praline 3 may be in the shape of a case substantially like that of the confectionery products sold under the marks "MON CHERI" and "POCKET COFFEE" by the Ferrero company. This is also true with regard to the choice of the filling 5 and the possible presence of a layer of protective material, such as a sugary material or the like, on the inner surface of the shell 4 which is not clearly visible in the drawings for obvious reasons of representation.

The structure of the praline 3 and the way in which it is made are in any case well known in the art and do not need to be described in detail herein, especially since they are not relevant for the purposes of an understanding of the invention.

The body 2 is usually arranged on a sort of tray or serviette 6 of sheet material. This preferably includes two side wings 7 which can be folded against the two opposite sides of the body 2 during packaging and when the product is eaten.

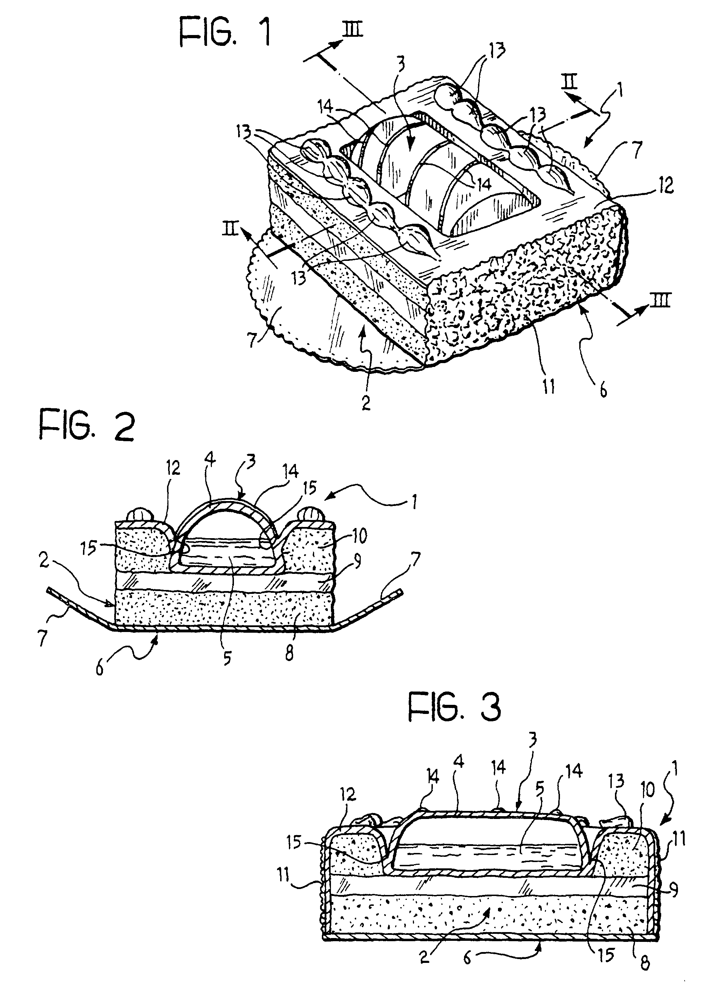

As shown in figures 1-3, the body 2 in question, has a layered structure including three layers, that is, from the bottom towards the top:
- a first layer 8 of a baked product (usually a so-called sponge) possibly moistened with a liquid such as a sweet syrup and/or liqueur,
- an intermediate layer 9 constituted by a creamy/pasty filling, such as, a cream with the flavour of milk, zabaione etc, and
- an upper layer 10 which, in the embodiment illustrated, is substantially the same as or identical to the bottom layer 8.

The body 2 has a generally prismatic shape, preferably parallelepipedal with a rectangular or square plan.

This type of shape (parallelepipedal) is not in itself essential. It is usually preferred for reasons of production efficiency, both for greater ease of manufacture and for the possibility of minimising and, in fact, eliminating waste.

Usually, the baked layers 8 and 10 (sponge) are arranged so that their outer faces display their internal cellular structure which results from the raising which occurs during their production. Even though this is not essential, this choice has the advantage of facilitating the appllcation of a coating or enrobing 11 on one or more side faces of the body 2 (in the embodiment illustrated, on the two shorter sides), the coating being constituted, for example, by a cream such as a chocolate-flavoured cream, optionally with a subsequent application (in the embodiment illustrated, only on the two shorter sides) of a granular material such as, for example, nut granules, coconut flakes, etc, possibly covered again with a further cream layer, for example with chocolate.

In the embodiment illustrated, the coating 11 is applied to the shorter sides of the body 2 while the longer sides against which the sides 7 of the tray 6 bear, are left uncovered.

Preferably the layer of granular material is applied solely to the shorter sides of the body 2 while the cream coating also extends over the upper face of the body 2, thus over the layer 10, as shown schematically at 12. The whole is such that it is possible to apply further decorative elements such as, for example, piped decorations 13 of creamy material and/or garnishing to the upper face of the product.

Further decorative elements such as lines of cream or the like may also be applied to the upper part of the praline 3 as shown schematically at 14 in the drawings.

As shown by the preferred embodiment illustrated by way of example in the appended drawings, the product according to the invention solves the problem of combining a praline with a filled body extremely well.

This combination could be achieved very simply by the superposition of the praline 3 on the body 2.

Such a solution would, however, have two basic disadvantages.

In the first place, the arrangement of the praline 3 on the body 2 could be insecure, there being a high risk of its accidental movement, removal or falling off during handling (such as packaging) after the production of the product, during storage and transfer to the place of sale, during transport to the home of the consumer and even in the period immediately before consumption.

In the second place, experiments carried out by the Applicant have shown that the simple superposition of the praline 3 on the body 2 is not the optimum as regards consumption for various reasons. More particularly, if the praline shell 3 were outside the body 2, when it was broken or pierced this would allow the filling 5 to be released from the body 2 whereas it is, on the contrary, desirable for this filling to be distributed uniformly over the body 2 and in the body 2 itself.

To achieve this result in the optimum manner, the invention instead provides for the praline 3 not simply to be superposed on the body 2 but to be housed partly within it.

For this purpose, the invention provides for at least one outer layer of the body 2 (in the embodiment illustrated, currently preferred, the upper layer 10) to be interrupted so as to form a cavity in which the praline 3 is placed during manufacture of the product 1.

The partial removal of the layer concerned (in the embodiment illustrated the layer 10) may be achieved by known means, for example by mechanical removal.

The removal of a layer on the surface, as indeed the layer 10, has at least two advantages;
- the praline 3 is visible from the exterior (as is seen in the drawings, the whole or a substantial part of the praline 3 may be housed in the body 2, in which latter case the praline 3 projects at least marginally, as in the embodiment illustrated, from the imaginary surface enveloping the body 2) whereby its presence is immediately perceptible, and
- it is possible, as illustrated at 15 in Figures 2 and 3, to achieve continuity between the coating material (specifically the areas 12 covered by chocolate cream) and the shell 4 of the praline 3, particularly when the components are identical or compatible. This is achieved, for example, with reference to a configuration such as that illustrated in the appended drawings, when both the material forming the coating 12 and the material constituting the shell 4 of the praline 3 are, for example, chocolate or chocolate-flavoured cream.

## Claims

1. A food product comprising:
- a body (2) with a layered structure (8, 9, 10), at least one of the layers of the body (2) having a cavity, and
- a praline (3) housed in the cavity,
**characterised in that** the body (2) comprises first and second layers (8, 10) of a baked sponge product and an intermediate layer (9) constituted by a creamy/pasty filling, said cavity is defined by at least one outer layer (10) of said first and second layers of baked sponge product, whereby the praline housed in the cavity projects marginally from said outer layer (10) and is at least partially visible from the exterior of the product, the body has a coating (11, 12) on said outer layer which extends towards the cavity and connects with the outer surface of the praline.

2. A product according to Claim 1, **characterised in that** the praline (3) comprises a shell (4) of material which is relatively resistant to chewing containing a liquid and/or creamy filling (5).

3. A product according to Claim 2, **characterised in that** the shell (4) is constituted by a chocolate-based material.

4. A product according to Claim 2 or Claim 3, **characterised in that** the filling (5) comprises a syrup.

5. A product according to any one of Claim 1 to 4, **characterised in that** the body (2) is of prismatic shape.

6. A product according to Claim 5, **characterised in that** the body (2) is of parallelepipedal shape.

7. A product according to anyone of Claims 1 to 6, **characterised in that** said coating (11) is made of creamy material.

8. A product according to Claim 7, **characterised in that** the coating (11) includes granular material.

9. A product according to any one of Claims 1 to 8, **characterised in that** the body (2) has garnishing (13) on its upper surface.

10. A product according to Claim 9, **characterised in that** the garnishing comprises piped formations of creamy material (13).

11. A product according to any one of Claims 1 to 10, **characterised in that** the top of the praline (3) has respective garnishing formations (14).

12. A product according to Claim 11, **characterised in that** the garnishing formations are thread-like formations (14) of a foodstuff.

13. A product according to any one of Claims 1 to 12, **characterised in that** it further includes, as a packaging element, a tray (6) on which the product (1) is deposited and which has lateral formations (7) which can be folded against the body (2).

14. A product according to any one of the preceding Claims 1 to 13, **characterised in that** it has bite-sized dimensions.

## Patentansprüche

1. Lebensmittelprodukt, umfassend
- einen Körper (2) mit einer Schichtstruktur (8, 9, 10), wobei mindestens eine der Schichten des Körpers (2) eine Vertiefung hat, und
- eine Praline (3), die in der Vertiefung untergebracht ist,
**dadurch gekennzeichnet, dass** der Körper (2) eine erste Schicht und eine zweite Schicht (8, 10) aus einem gebackenen Rührteigprodukt und eine Zwischenschicht (9), die aus einer cremigen/pastösen Füllung besteht, umfasst, dass die Vertiefung durch mindestens eine äußere Schicht (10) aus der ersten oder zweiten Schicht aus gebackenem Rührteigprodukt definiert ist, wodurch die Praline, die in der Vertiefung untergebracht ist, geringfügig aus der äußeren Schicht (10) herausragt und mindestens teilweise von außerhalb des Produktes zu sehen ist, dass der Körper einen Überzug (11, 12) auf der äußeren Schicht hat, der sich in Richtung der Vertiefung erstreckt und mit der äußeren Oberfläche der Praline in Verbindung steht.

2. Produkt nach Anspruch 1, **dadurch gekennzeichnet, dass** die Praline (3) eine Schale (4) aus einem Material, das relativ kaubeständig ist, die eine flüssige und/oder cremige Füllung (5) enthält, umfasst.

3. Produkt nach Anspruch 2, **dadurch gekennzeichnet, dass** die Schale (4) von einem Material auf der Basis von Schokolade gebildet wird.

4. Produkt nach Anspruch 2 oder Anspruch 3, **dadurch gekennzeichnet, dass** die Füllung (5) Sirup umfasst.

5. Produkt nach einem der Ansprüche 1 bis 4, **dadurch gekennzeichnet, dass** der Körper (2) eine prismatische Form hat.

6. Produkt nach Anspruch 5, **dadurch gekennzeichnet, dass** der Körper (2) eine Parallelepiped-Form hat.

7. Produkt nach einem der Ansprüche 1 bis 6, **dadurch gekennzeichnet, dass** der Überzug (11) aus cremigem Material hergestellt ist.

8. Produkt nach Anspruch 7, **dadurch gekennzeichnet, dass** der Überzug (11) körniges Material enthält.

9. Produkt nach einem der Ansprüche 1 bis 8, **dadurch gekennzeichnet, dass** der Körper (2) an seiner Oberseite eine Garnierung (13) hat.

10. Produkt nach Anspruch 9, **dadurch gekennzeichnet, dass** die Garnierung gespritzte Formungen aus cremigem Material (13) umfasst.

11. Produkt nach einem der Ansprüche 1 bis 10, **dadurch gekennzeichnet, dass** der obere Teil der Praline (3) eigene Garnierungsformungen (14) hat.

12. Produkt nach Anspruch 11, **dadurch gekennzeichnet, dass** die Garnierungsformungen fadenförmige Formungen (14) eines Lebensmittels sind.

13. Produkt nach einem der Ansprüche 1 bis 12, **dadurch gekennzeichnet, dass** es außerdem als Verpackungselement ein Tablett (6) umfasst ist, auf das das Produkt (1) gelegt ist und das seitliche Formungen (7) hat, die gegen den Körper (2) gefaltet werden können.

14. Produkt nach einem der vorangehenden Ansprüche 1 bis 13, **dadurch gekennzeichnet, dass** es Abmessungen in der Größe eines Happens hat.

## Revendications

1. Produit alimentaire comprenant :
- un corps (2) avec une structure à couches (8, 9, 10), au moins l'une des couches du corps (2) comportant une cavité, et
- une praline (3) logée dans la cavité,
**caractérisé en ce que** le corps (2) comprend des première et deuxième couches (8, 10) d'un gâteau de Savoie cuit et une couche intermédiaire (9) constituée par un fourrage crémeux ou pâteux, ladite cavité est définie par au moins une couche externe (10) desdites première et deuxième couches de gâteau de Savoie cuit, de manière que la praline logée dans la cavité fasse très légèrement saillie de ladite couche externe (10) et soit au moins en partie visible de l'extérieur du produit, le corps comporte un enrobage (11, 12) sur ladite couche externe qui s'étend vers la cavité et se raccorde à la surface externe de la praline.

2. Produit selon la revendication 1, **caractérisé en;ce que** la praline (3) comprend une enveloppe (4) d'une matière qui est relativement croquante contenant un fourrage liquide et/ou crémeux (5).

3. Produit selon la revendication 2, **caractérisé en ce que** l'enveloppe (4) est constituée par une matière à base de chocolat.

4. Produit selon la revendication 2 ou la revendication 3, **caractérisé en ce que** le fourrage (5) comprend un sirop.

5. Produit selon l'une quelconque des revendications 1 à 4, **caractérisé en ce que** le corps (2) a la forme d'un prisme.

6. Produit selon la revendication 5, **caractérisé en ce que** le corps (2) a la forme d'un parallélépipède.

7. Produit selon l'une quelconque des revendications 1 à 6, **caractérisé en ce que** ledit enrobage (11) est constitué d'une matière crémeuse.

8. Produit selon la revendication 7, **caractérisé en ce que** l'enrobage (11) comprend une matière granulaire.

9. Produit selon l'une quelconque des revendications 1 à 8, **caractérisé en ce que** le corps (2) comporte une garniture (13) sur sa surface supérieure.

10. Produit selon la revendication 9, **caractérisé en ce que** la garniture comprend des tuyaux de matière crémeuse (13).

11. Produit selon l'une quelconque des revendications 1 à 10, **caractérisé en ce que** le dessus de la praline (3) comporte des garnitures respectives (14).

12. Produit selon la revendication 11, **caractérisé en ce que** les garnitures sont des filets (14) d'une substance alimentaire.

13. Produit selon l'une quelconque des revendications 1 à 12, **caractérisé en ce qu'**il comprend également, comme élément d'emballage, une barquette (6) sur laquelle le produit (1) est déposé et qui comporte des ailettes latérales (7) qui peuvent être repliées contre le corps (2).

14. Produit selon l'une quelconque des revendications 1 à 13, **caractérisé en ce qu'**il a des dimensions correspondant à une bouchée.
